Europäisches Patentamt

European Patent Office

Office européen des brevets

(19)

(11) Numéro de publication: **0 354 098**
**A1**

(12) **DEMANDE DE BREVET EUROPEEN**

(21) Numéro de dépôt: 89402120.3

(22) Date de dépôt: 26.07.89

(51) Int. Cl.⁵: **H 02 P 7/288**
**G 05 F 1/59**

(30) Priorité: 01.08.88 FR 8810354

(43) Date de publication de la demande:
07.02.90 Bulletin 90/06

(84) Etats contractants désignés: **DE FR GB IT**

(71) Demandeur: **VALEO ELECTRONIQUE**
**21-27, boulevard Gambetta**
**F-92130 Issy-les-Moulineaux (FR)**

(72) Inventeur: **Tardif, François**
**83, Avenue du Maine**
**F-75014 Paris (FR)**

(74) Mandataire: **Lemaire, Marc et al**
**VALEO Département Propriété Industrielle 30, rue Blanqui**
**F-93406 Saint-Ouen (FR)**

(54) Circuit de commande de variation de puissance avec plusieurs transistors de puissance en parallèle.

(57) L'invention concerne un circuit de commande de variation de la puissance appliquée à un organe électrique de puissance tel que par exemple un moteur électrique ou éventuellement un haut-parleur de forte puissance. On propose de commander le moteur à l'aide d'un couple de deux transistors à effet de champ (Q, Q') montés en parallèle et en ballast, c'est-à-dire en série avec le courant principal du moteur, la commande étant continue et non découpée; un circuit d'équilibrage (SH1, SH2, T1, T2) contrôle que les courants dans les deux transistors en parallèle soient aussi identiques que possible. La commande se fait par un potentiomètre (POT) fournissant une tension continue variable sur la grille du premier transistor à effet de champ (Q). Une résistance de contre-réaction (R2) limite l'influence de la dispersion des caractéristiques des transistors, et une thermistance (CTP) protège le circuit contre une élévation de température excessive.

L'invention est destinée particulièrement à la commande de moteurs de ventilateurs, et tout spécialement à la commande de débit d'air d'un système de conditionnement d'air de l'habitacle d'un véhicule automobile.

FIG_2

EP 0 354 098 A1

**Description**

## CIRCUIT DE COMMANDE DE VARIATION DE PUISSANCE AVEC PLUSIEURS TRANSISTORS DE PUISSANCE EN PARALLELE

L'invention concerne un circuit de commande de variation de la puissance appliquée à un organe électrique de puissance tel que par exemple un moteur électrique ou éventuellement un haut-parleur de forte puissance.

Dans certaines applications on a besoin de pouvoir faire varier continûment la puissance appliquée à un organe électrique. C'est le cas par exemple pour un moteur entraînant un ventilateur dont on veut pouvoir régler le débit d'air soufflé; une application particulière à laquelle la présente invention se prête très bien est la commande du pulseur d'air d'un système de conditionnement d'air de l'habitacle d'un véhicule; l'invention s'applique aussi généralement bien à la commande de moteurs de ventilateurs, le circuit de commande étant alors placé dans le flux d'air soufflé par le ventilateur pour bénéficier d'un refroidissement plus efficace.

Pour ce type d'application, on veut un circuit de commande particulièrement simple, fiable, ne nécessitant pas de dispositifs annexes coûteux, et ne nécessitant pas de réglage en usine pour ajuster le fonctionnement en fonction de la dispersion de fabrication des caractéristiques des composants utilisés.

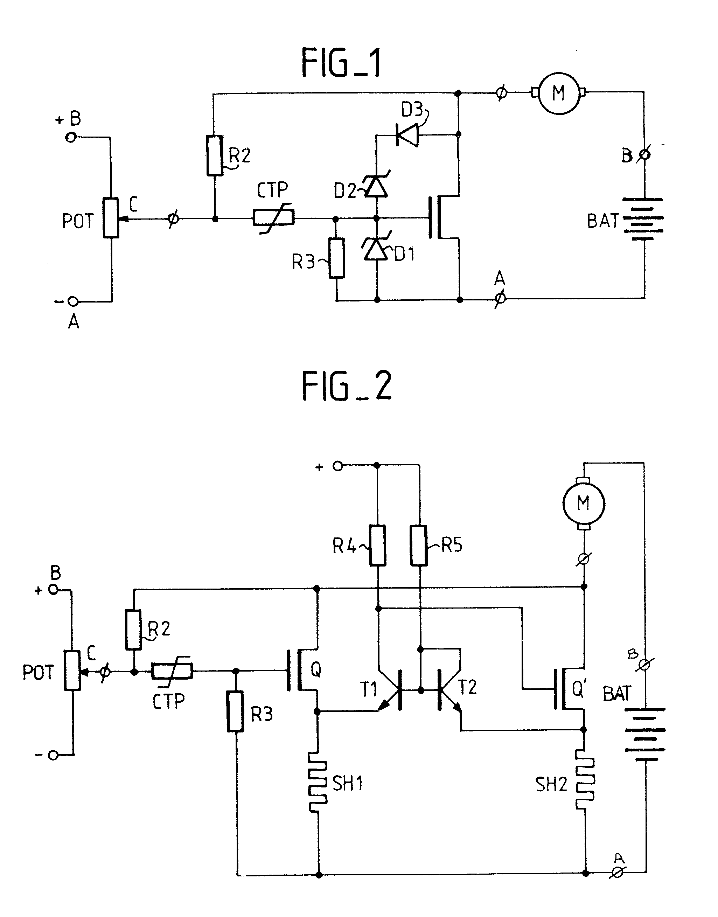

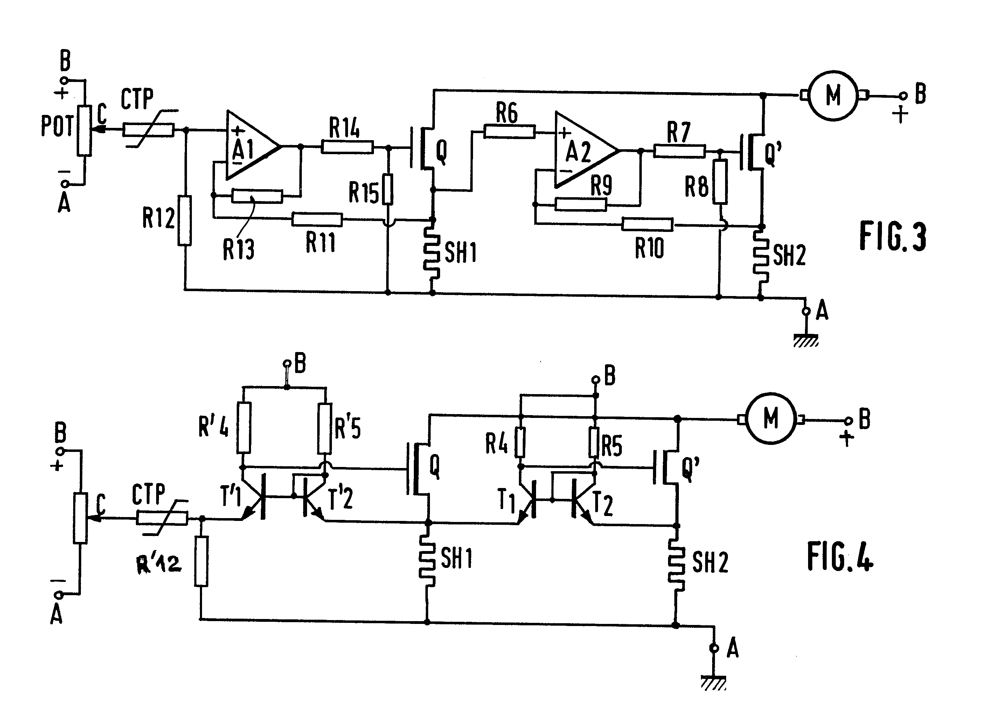

Le schéma de la figure 1 correspond à la commande d'un moteur électrique M; il comprend un transistor à effet de champ Q en série avec le moteur, l'ensemble en série étant alimenté par une batterie BAT dont une première borne A est reliée à la source du transistor Q et dont une deuxième borne B est reliée au moteur M.

Le transistor est monté en ballast, c'est-à-dire en série avec le courant principal du moteur, et il laisse passer un courant plus ou moins important selon sa tension grille-source $Vgs$. Le courant qui circule dans le transistor est un courant continu.

La tension grille-source $Vgs$ peut varier en continu sous la commande de déplacement d'un curseur C d'un potentiomètre POT dont les bornes sont alimentées par exemple par la batterie BAT.

Une résistance de contre-réaction R2 est connectée en série avec une thermistance de protection CTP entre le drain et la grille du transistor à effet de champ, la thermistance étant connectée à la grille; le point de jonction de la thermistance et de la résistance de contre-réaction est connecté au curseur du potentiomètre.

Enfin, une résistance R3 est connectée entre grille et source et des diodes de protection D1, D2, D3 sont placées entre grille et source d'une part, entre grille et drain d'autre part, pour protéger le transistor contre des surtensions.

Ce schéma offre de nombreux avantages de simplicité et de fiabilité; il ne nécessite pas de filtre d'antiparasitage qui serait nécessaire si le transistor fonctionnait en commutation.

Mais ce schéma n'est pas utilisable au delà de certaines valeurs de puissance. En effet, le transistor consomme beaucoup de puissance; si on veut augmenter la puissance du moteur ou de tout autre organe commandé par ce circuit, il faudrait un transistor encore plus gros; le coût en devient prohibitif car pour des transistors de forte puissance (plusieurs centaines de watts) le coût d'un transistor augmente proportionnellement beaucoup plus vite que sa puissance.

L'invention propose un circuit de commande de puissance capable de commander des puissances beaucoup plus élevées que le schéma de la figure 1 sans augmentation de coût prohibitive.

Pour cela, on utilise au moins deux transistors à effet de champ fonctionnant essentiellement en parallèle mais avec un circuit d'équilibrage des courants passant dans les deux transistors.

Selon l'invention, on propose un circuit de commande de puissance d'un organe électrique, notamment un moteur, comprenant un premier transistor à effet de champ ayant une source connectée par l'intermédiaire d'une résistance de très faible valeur à une première borne d'une source d'alimentation, un drain connecté à l'organe à commander, et une grille connectée à une source de potentiel continu variable, un deuxième transistor à effet de champ ayant une source connectée à la première borne d'alimentation par l'intermédiaire d'une autre résistance de très faible valeur identique à la première, un drain connecté à l'organe à commander, et une grille connectée à la sortie d'un amplificateur différentiel ayant deux entrées connectées respectivement à la source du premier transistor et à la source du deuxième transistor.

Grâce à ce montage, on évite que les courants dans les deux transistors soient déséquilibrés l'un par rapport à l'autre; le risque de déséquilibre est en effet d'autant plus grand que les transistors à effet de champ ont des caractéristiques de transconductance très dispersées (y compris dans une même fabrication en série), et que ces transistors ont tendance, dans certains cas ou dans certaines gammes de valeurs de courant, à laisser passer plus de courant lorsque leur température augmente (et elle augmente avec le passage du courant).

L'amplificateur différentiel comprend de préférence deux branches différentielles, chacune comprenant un transistor bipolaire en série avec une résistance respective. Les transistors bipolaires ont leurs émetteurs reliés aux sources des transistors à effet de champ, leurs bases reliées entre elles, le premier transistor bipolaire ayant son collecteur relié à la grille du deuxième transistor à effet de champ et le deuxième transistor bipolaire ayant sa base et son collecteur réunis, ce qui correspond à un montage en diode.

Cet amplificateur différentiel fonctionne comme un miroir de courant et peut donc être réalisé par tout circuit de ce type.

D'autres caractéristiques et avantages de l'invention apparaîtront à la lecture de la description détaillée qui suit et qui est faite en référence aux dessins annexés dans lesquels :

- la figure 1, déjà décrite représente un circuit de commande à un transistor à effet de champ;
- la figure 2 représente un circuit de commande selon l'invention;
- la figure 3 représente une variante de réalisation utilisant deux amplificateurs opérationnels;
- la figure 4 représente une autre variante de réalisation avec deux miroirs de courant commandant chacun la grille d'un transistor à effet de champ respectif.

Sur la figure 2, on a représenté un schéma avec deux transistors de puissance à effet de champ à grille isolée Q et Q', réalisés en technologie MOS. Le transistor Q est commandé par un circuit qui est rigoureusement le même que celui de la figure 1, à l'exception du fait qu'une résistance SH1 de très faible valeur (environ 10 milliohms) est insérée entre la source du transistor et la borne A de la batterie (borne négative dans le cas où les transistors sont à canal N).

Le deuxième transistor, Q', est monté de la manière suivante: sa source est connectée à la borne A par une autre résistance SH2, de même valeur que la résistance SH1. Son drain est connecté au drain du transistor Q. Sa grille est commandée par la sortie d'un amplificateur différentiel fonctionnant en miroir de courant dont les entrées sont reliées respectivement aux sources des deux transistors. Le montage est tel qu'un petit déséquilibre de courant dans les résistances SH1 et SH2 (c'est-à-dire dans les transistors Q et Q') entraîne une différence de potentiel entre les entrées du miroir de courant; la sortie du miroir de courant agit sur la grille du transistor Q' dans un sens tendant à s'opposer au déséquilibre; si le courant dans Q' devient plus faible que le courant dans Q, la tension sur la grille de Q' augmentera pour augmenter le courant dans Q'.

Le miroir de courant est réalisé d'une manière très simple: il comporte deux branches, l'une comportant un transistor bipolaire T1 polarisé dans son collecteur par une résistance R4, reliée à une borne d'alimentation (de préférence la borne positive B de la batterie); l'émetteur du transistor T4 est relié à la source du transistor Q; l'autre branche comprend un transistor bipolaire T2 monté en diode entre la base du transistor T4 et la source du deuxième transistor Q'. Une résistance R5 polarise le point commun des deux transistors T1 et T2 (leurs bases). Les résistances et transistors bipolaires sont dimensionnés de telle sorte que le courant qui les traverse ne soit qu'une très faible fraction du courant traversant les transistors MOS.

Sur la figure 2 on n'a pas représenté les diodes de protection contre les surtensions: le montage est le même qu'à la figure 1 pour le transistor Q et un montage identique peut être fait pour le transistor Q' : une diode zener D1 entre grille et source, et une diode zener D2 en série avec une diode normale D3 entre grille et drain.

La commande de variation de puissance se fait par réglage du potentiomètre POT, ce qui modifie le potentiel présent sur la grille du transistor à effet de champ Q; le courant du transistor Q est donc modifié en conséquence; le potentiel aux bornes de la résistance SH1 varie; le miroir de courant (T1, T2, R4, R5) se déséquilibre et le potentiel de la grille du transistor Q' varie dans un sens tel que le courant dans la résistance SH2 redevienne égal au courant dans la résistance SH1 (les résistances SH1, SH2 étant d'égales valeurs).

La résistance de contre-réaction R2 diminue la pente de variation du courant dans le transistor T1 en fonction de la tension grille-source. Elle réduit ainsi l'influence de la dispersion des caractéristiques de transconductance des transistors utilisés dans la fabrication.

Dans le schéma de la figure 2, le transistor T2 fonctionne en diode et il pourrait donc être remplacé par un composant de ce type. Cependant, on constate que le montage ainsi réalisé présente des dispersions de caractéristiques plus élevées et que le meilleur résultat est obtenu en utilisant deux transistors bipolaires T1 et T2 identiques.

La thermistance CTP, fixée sur le premier transistor à effet de champ Q ou sur son radiateur, assure une protection contre un échauffement excessif en réduisant la tension grille-source du transistor Q lorsque la température augmente.

La résistance R3 permet d'établir un pont diviseur avec la résistance R2 et la thermistance CTP pour que ces résistances jouent correctement leur rôle. D'abord, en relation avec la thermistance CTP, la résistance R3 constitue un pont diviseur dont le point milieu est relié à la grille du transistor Q. Lorsque le transistor chauffe, la résistance de la thermistance augmente de valeur et le potentiel de la grille tend à devenir proportionnellement plus faible que la valeur qu'il aurait si la thermistance ne chauffait pas. Ensuite, en relation avec la thermistance CTP et la résistance R2, la résistance R3 a pour fonction d'abaisser automatiquement la tension grille-source Vgs dans le cas où la liaison avec le curseur C est interrompue. Cela permet de limiter la vitesse du moteur en cas de coupure de cette liaison, ce qui ne serait pas fait s'il n'y avait pas la résistance R3.

On notera que la thermistance CTP est insérée dans la boucle de contre-réaction entre drain et grille du transistor et que de ce fait sa dynamique d'action en fonction de la température et la vitesse de réaction à une variation de température est plus forte que si la résistance R2 était directement connectée entre drain et grille avec la thermistance entre le curseur C et la grille. D'autre part, on peut remarquer qu'il n'y a qu'un fil de liaison entre le circuit de commande et le tableau de bord du véhicule (fil allant du curseur C situé sur le tableau de bord jusqu'à la grille du transistor à travers la thermistance qui est montée mécaniquement sur le transistor).

Si l'on veut augmenter encore la puissance qui peut être commandée par ce circuit, on peut utiliser un troisième, voire un quatrième transistor à effet de champ, etc., avec un circuit d'équilibrage des courants du transistor supplémentaire et du premier transistor Q. Le transistor supplémentaire a sa source reliée par une résistance de très faible valeur, identique à SH1, à la borne A. Son drain est relié à l'organe à commander. Sa grille est reliée à la sortie d'un miroir de courant dont une entrée est reliée à la source du transistor Q et l'autre entrée est reliée à la source du transistor supplémentaire; le miroir de courant est identique à celui de la figure 2.

La figure 3 représente une variante de réalisation de l'invention. Dans cette variante, pour obtenir un plus grand gain d'amplificateur différentiel, donc un meilleur équilibrage de courants dans les transistors à effet de champ Q et Q', on n'utilise pas un montage à deux transistors en miroir de courant, mais on utilise un amplificateur opérationnel à grand gain pour commander la grille du transistor Q'. Par l'expression classique "amplificateur opérationnel", on entend un amplificateur ayant un grand gain en boucle ouverte, une grande impédance d'entrée, et une faible impédance de sortie.

L'amplificateur opérationnel à grand gain est désigné par la référence A2. Il comporte une entrée inverseuse reliée par une résistance R10 au point de jonction de la source du transistor Q' et de la résistance SH2, et une entrée non inverseuse reliée par une résistance R6 au point de jonction entre la source du transistor Q et la résistance SH1. Ces résistances R6 et R10 sont en principe égales. La sortie de l'amplificateur opérationnel A2 est reliée à l'entrée d'un pont diviseur résistif R7, R8, relié par ailleurs à la masse, la sortie du pont diviseur étant reliée à la grille du transistor Q'. Enfin, une résistance de bouclage R9 relie la sortie de l'amplificateur opérationnel à son entrée inverseuse.

L'ensemble de l'amplificateur opérationnel et des résistances R6 à R10 constitue un amplificateur différentiel à grand gain qui asservit la grille du transistor Q' de telle manière que le courant dans la résistance SH2, donc dans le transistor Q', suive exactement le courant dans la résistance SH1 donc dans le transistor Q. Le rapport des résistances R9 et R6, R10 définit le gain en tension de l'amplificateur différentiel.

De plus, le schéma de la figure 3 comporte de préférence un autre amplificateur opérationnel A1, pour commander la grille du transistor Q à partir du curseur du potentiomètre POT. Le but de ce schéma est d'éviter au maximum les dispersions de courant résultant des dispersions de caractéristiques des transistors Q et Q'. Dans le schéma de la figure 2, le courant dans le moteur pour une position de curseur de potentiomètre donnée dépend des caractéristiques du transistor Q, et ces caractéristiques présentent des dispersions de fabrication importante. Dans le schéma de la figure 3, il n'y a pas ce défaut.

En effet, l'amplificateur opérationnel A1 est monté de manière à commander la grille du transistor Q en asservissant le courant dans le transistor Q (et non pas la tension de grille du transistor Q) sur la tension délivrée par le curseur du potentiomètre POT.

En d'autres mots, au lieu d'asservir la tension de grille du transistor Q sur la tension délivrée par le curseur du potentiomètre, ce qui engendre un courant variable selon les caractéristiques du transistor, on asservit ici directement le courant du transistor (par l'intermédiaire de la tension prélevée aux bornes de la résistance SH1) sur la tension délivrée par le curseur du potentiomètre.

Le montage est le suivant : l'entrée inverseuse de l'amplificateur opérationnel A1 est reliée par une résistance R11 au point de jonction entre la source du transistor Q et la résistance SH1; la tension présente sur l'entrée inverseuse est donc directement liée au courant dans la résistance SH1. Le curseur C du potentiomètre de réglage de courant POT est relié à une borne d'une thermistance CTP dont l'autre borne est reliée à l'entrée non inverseuse de l'amplificateur A1. Une résistance R12 est reliée entre cette entrée non inverseuse et la borne négative A de l'alimentation. La résistance R12 forme avec la thermistance CTP un pont diviseur permettant d'appliquer à l'entrée non inverseuse une fraction variable, fonction de la température, de la tension fournie par le curseur C du potentiomètre POT. Une résistance de contre réaction R13 relie la sortie de l'amplificateur A1 à son entrée inverseuse. La sortie de l'amplificateur A1 est reliée à l'entrée d'un pont diviseur résistif R14, R15, relié par ailleurs à la masse, la sortie du pont diviseur étant reliée à la grille du transistor Q.

L'ensemble de l'amplificateur opérationnel A1 et des résistances R11 à R15 constitue un amplificateur différentiel monté de manière à asservir la tension sur une de ses entrées à la tension présente sur l'autre entrée; il asservit ici la tension aux bornes de la résistance SH1 à la tension imposée par le potentiomètre POT (corrigée en fonction de la température grâce à la thermistance CTP); il asservit donc le courant dans le transistor Q à la tension imposée par le potentiomètre. Les caractéristiques du transistor n'interviennent pas ou pratiquement pas et on peut donc tolérer une certaine dispersion de fabrication sur le transistor Q. Le courant dans l'autre transistor Q' est par ailleurs asservi au courant dans le transistor Q grâce à l'amplificateur A2, et la dispersion de caractéristiques entre les deux transistors n'intervient pas non plus.

La figure 4 représente une variante de réalisation dans le même esprit que la figure 3, destinée à supprimer au maximum l'influence de la dispersion de caractéristiques des transistors Q et Q', non seulement entre eux, mais aussi dans l'absolu. Le schéma de la figure 4 utilise des transistors montés en miroirs de courant et non des amplificateurs opérationnels, pour réduire le coût global en composants.

Le montage de commande du transistor Q' est le même qu'à la figure 2 ; on a repris les mêmes références pour désigner les mêmes éléments et on ne redécrira pas le fonctionnement en détail; un transistor T2 monté en diode, ou une simple diode, a son émetteur relié à la source du transistor Q'; un transistor T1, ayant son émetteur relié à la source du transistor Q, est monté de manière à recopier le courant dans le transistor T2; le collecteur du transistor T1 est relié à la grille du transistor Q'; tout déséquilibre de courant entraîne une modification du potentiel de grille du transistor Q' jusqu'à ramener l'équilibre; l'équilibre correspond à une égalité de tension aux bornes des résistances SH1 et SH2.

De plus, un autre montage à miroirs de courant, accomplissant la même fonction que l'amplificateur A1 de la figure 3, et destiné à commander le premier transistor Q, est prévu. Il comprend deux transistors T'1 et T'2 et deux résistances R'4, R'5, montés exactement comme les transistors T1, T2 et les résistances R4, R5.

L'entrée de ce montage, qui est l'émetteur du transistor bipolaire T'1, est connectée au point milieu d'un pont diviseur constitué par la thermistance CTP et une résistance R'12 (analogue à la résistance R12 de la figure 3). Le pont diviseur est lui-même connecté entre le curseur C du potentiomètre de réglage de courant POT et la borne A d'alimentation. Le potentiomètre est alimenté entre les bornes A et B d'alimentation. Ainsi, l'émetteur du transistor T'1 est porté à une tension qui est une fraction (variable en fonction de la température) de la tension présente sur le curseur du potentiomètre.

L'émetteur du transistor T'2 est relié à la source du transistor Q et à la résistance SH1. Le transistor T'1 recopie le courant qui circule dans le transistor T2, ce dernier étant monté en diode ou étant constitué par une simple diode. La grille du transistor Q est reliée au collecteur du transistor T'1. Il en résulte que le transistor Q reçoit en permanence sur sa grille une tension d'asservissement; cette tension engendre à sont tour un courant dans le transistor Q, donc dans la résistance SH1; l'équilibre s'établit lorsque la différence de potentiel aux bornes de la résistance SH1 devient égale à la tension établie par le curseur C du potentiomètre sur l'émetteur du transistor T'1. Le courant établi dans le transistor Q et donc dans le moteur est là encore indépendant des caractéristiques du transistor Q, et il est parfaitement équilibré dans les deux transistors Q et Q'.

Dans tous les montages qui ont été ainsi décrits, la qualité de l'équilibrage des courants est liée essentiellement à l'équilibrage des valeurs de shunts SH1 et SH2.

Une petite variante de schéma de la figure 4 consisterait à remplacer la connexion entre l'émetteur du transistor T1 et la résistance SH1 par une connexion entre l'émetteur du transistor T1 et l'émetteur du transistor T'1. En effet, dans le schéma de la figure 4, le courant dans le transistor Q est asservi sur la position du curseur du potentiomètre de réglage, et le courant dans le transistor Q' est asservi sur le courant dans le transistor Q. En effectuant la modification de connexion indiquée ci-dessus, on asservit directement les courants des deux transistors sur la position du curseur du potentiomètre, selon un principe qui ne fait pas intervenir la dispersion de caractéristiques des transistors Q et Q', et on atteint donc les mêmes résultats qu'avec le montage strictement équivalent de la figure 4.

## Revendications

1. Circuit de commande de puissance d'un organe électrique, notamment un moteur, caractérisé en ce qu'il comprend un premier transistor à effet de champ (Q) ayant une source connectée par l'intermédiaire d'une résistance de très faible valeur (SH1) à une première borne (A) d'une source d'alimentation (BAT), un drain connecté à l'organe à commander (M), et une grille connectée à une source de potentiel continu variable (C), un deuxième transistor à effet de champ (Q') ayant une source connectée à la première borne d'alimentation (A) par l'intermédiaire d'une autre résistance (SH2) de très faible valeur identique à la première, un drain connecté à l'organe à commander, et une grille connectée à la sortie d'un amplificateur différentiel (T1, T2, R4, R5) ayant deux entrées connectées respectivement à la source du premier transistor (Q) et à la source du deuxième transistor (Q').

2. Circuit de commande selon la revendication 1, caractérisé en ce que l'amplificateur différentiel comprend de préférence deux branches différentielles, chacune comprenant un transistor bipolaire (T1, T2) en série avec une résistance respective (R4, R5), les transistors bipolaires ayant leurs émetteurs reliés aux sources des transistors à effet de champ, leurs bases reliées entre elles, le premier transistor bipolaire ayant son collecteur relié à la grille du deuxième transistor à effet de champ et le deuxième transistor bipolaire ayant sa base et son collecteur réunis.

3. Circuit de commande selon la revendication 2, caractérisé en ce que le deuxième transistor bipolaire (T2) est constitué par une diode.

4. Circuit de commande selon la revendication 1, caractérisé en ce que l'amplificateur différentiel est réalisé par un miroir de courant.

5. Circuit de commande selon l'une des revendications 1,2,3 ou 4, caractérisé en ce qu'il comporte une résistance de contre-réaction (R2, CTP) entre le drain et la grille du premier transistor à effet de champ (Q).

6. Circuit de commande selon l'une des revendications 1 à 5, caractérisé en ce qu'il comporte une thermistance à coefficient de température positif (CTP) fixée sur le premier transistor à effet de champ (Q) et connectée électriquement entre une source de tension continue variable (C) et la grille du transistor.

7. Circuit de commande selon la revendication 6, caractérisé en ce qu'il comporte une boucle de contre-réaction constituée par une résistance fixe (R2) en série avec la thermistance (CTP) entre le drain et la grille du premier transistor à effet de champ.

8. Circuit de commande selon la revendication 7, caractérisé en ce qu'il comporte un potentiomètre (POT) de réglage d'une tension continue à appliquer à la grille du premier transistor à effet de champ, le potentiomètre ayant deux bornes extrêmes connectées aux bornes (A et B) d'une source d'alimentation et un curseur (C) relié à la grille de ce transistor par l'intermédiaire de la thermistance (CTP).

9. Circuit de commande selon l'une des revendications 1 à 8, caractérisé en ce qu'il comporte une résistance (R3) entre la grille et la source du premier transistor à effet de champ.

10. Circuit de commande selon l'une des revendications précédentes, caractérisé en ce qu'il comporte un autre amplificateur différentiel (A1; T'1, T'2) ayant une première entrée reliée par l'intermédiaire d'une thermistance au curseur d'un potentiomètre de réglage (POT) et une deuxième entrée reliée à la résistance de faible valeur (SH1) connectée à la source de l'un des transistors à effet de champ (Q).

11. Circuit de commande selon la revendication 10, caractérisé en ce que le deuxième amplificateur différentiel est réalisé par un montage en miroir de courant de deux transistors bipolaires.

12. Circuit de commande selon l'une des revendications précédentes, caractérisé en ce que le ou les amplificateurs différentiels sont réalisés par des amplificateurs opérationnels.

13. Circuit de commande selon l'une des revendications précédentes, pour la commande d'un moteur de ventilateur, caractérisé en ce qu'il est placé dans le flux d'air du ventilateur.

14. Application du circuit de commande selon l'une des revendications précédentes à la commande d'un moteur de système de conditionnement d'air de l'habitacle d'un véhicule automobile.

# FIG_1

# FIG_2

EP 0 354 098 A1

B

POT

C

CTP

R12

R13

R11

R14

R15

A1

Q

SH1

R6

A2

R9

R10

R7

R8

Q'

SH2

M

B

A

A

**FIG.3**

B

C

CTP

R'12

R'4

R'5

T'1

T'2

Q

SH1

R4

R5

T1

T2

Q'

SH2

M

B

A

A

**FIG.4**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0055189 (AUTOMOBILES PEUGEOT)<br>* abrégé; figure 1 *<br>--- | 1, 5-8 | H02P7/288<br>G05F1/59 |
| A | DE-A-3538584 (ANT NACHRICHTENTECHNIK)<br>* colonne 3, lignes 6 - 29; figure 1 *<br>--- | 1 | |
| A | US-A-4044287 (R. RATZEL ET AL)<br>* abrégé; figure 1 *<br>--- | 1, 8, 10 | |
| A | PATENT ABSTRACTS OF JAPAN<br>vol. 10, no. 309 (E-447)(2365) 21 octobre 1986,<br>& JP-A-61 121796 (MAKITA DENKI SEISAKUSHO K.K)<br>* le document en entier *<br>--- | 1 | |
| A | PATENT ABSTRACTS OF JAPAN<br>vol. 10, no. 16 (E-375)(2073) 22 janvier 1986,<br>& JP-A-60 176495 (MATSUSHITA DENKO K.K)<br>* le document en entier *<br>----- | 1 | |

### DOMAINES TECHNIQUES RECHERCHES (Int. Cl.5 )

G05F
H02P
B60H

Le présent rapport a été établi pour toutes les revendications

| Lieu de la recherche | Date d'achèvement de la recherche | Examinateur |
|---|---|---|
| LA HAYE | 22 NOVEMBRE 1989 | CLEARY F.M. |